(19) Europäisches Patentamt
European Patent Office
Office européen des brevets

(11) EP 4 394 981 A1

(12) **EUROPEAN PATENT APPLICATION**
published in accordance with Art. 153(4) EPC

(43) Date of publication:
**03.07.2024 Bulletin 2024/27**

(21) Application number: **22861139.8**

(22) Date of filing: **09.08.2022**

(51) International Patent Classification (IPC):
***H01M 10/0567*** *(2010.01)* ***H01M 4/13*** *(2010.01)*
***H01M 4/134*** *(2010.01)* ***H01M 4/136*** *(2010.01)*
***H01M 4/36*** *(2006.01)* ***H01M 4/38*** *(2006.01)*
***H01M 4/48*** *(2010.01)* ***H01M 4/58*** *(2010.01)*

(52) Cooperative Patent Classification (CPC):
**H01M 4/13; H01M 4/134; H01M 4/136; H01M 4/36; H01M 4/38; H01M 4/48; H01M 4/58; H01M 10/0567;** Y02E 60/10

(86) International application number:
**PCT/JP2022/030407**

(87) International publication number:
**WO 2023/026849 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.08.2021 JP 2021136414**

(71) Applicant: **SHIN-ETSU CHEMICAL CO., LTD.**
**Tokyo 1000005 (JP)**

(72) Inventors:
- **KANESATO, Shuhei**
  **Tokyo 100-0005 (JP)**
- **HIROSE, Takakazu**
  **Annaka-shi, Gunma 379-0125 (JP)**
- **OSAWA, Yusuke**
  **Annaka-shi, Gunma 379-0125 (JP)**
- **KIYOMORI, Ayumu**
  **Joetsu-shi, Niigata 942-8601 (JP)**
- **AOKI, Shotaro**
  **Joetsu-shi, Niigata 942-8601 (JP)**

(74) Representative: **Sonnenhauser, Thomas Martin**
**Wuesthoff & Wuesthoff**
**Patentanwälte und Rechtsanwalt PartG mbB**
**Schweigerstraße 2**
**81541 München (DE)**

# (54) NONAQUEOUS ELECTROLYTE AND NONAQUEOUS ELECTROLYTE SECONDARY BATTERY

(57) The present invention is a non-aqueous electrolyte used for a non-aqueous electrolyte secondary battery in which a negative electrode contains at least any of a silicon compound, a germanium compound, and a tin compound as a negative electrode active material particle, the non-aqueous electrolyte including a silane compound represented by the following general formula (1). This provides a non-aqueous electrolyte and a non-aqueous electrolyte secondary battery in which a battery cell hardly expands even when a negative electrode material such as a silicon material is used.

$$Si(R^1)_l(R^2)_m(R^3)_{4-l-m} \qquad (1)$$

In the general formula (1), $R^1$ represents an aryl group in which a part or all of hydrogen atoms in an aryl group having 6 to 20 carbon atoms are substituted with a fluorine atom or a fluoroalkyl group; $R^2$ represents an alkenyl group or alkynyl group having 2 to 20 carbon atoms; $R^3$ represents an alkyl group having 1 to 20 carbon atoms; and "l" and "m" each independently represent an integer of 1 to 3, provided that $2 \leq l+m \leq 4$ is satisfied.

EP 4 394 981 A1

## Description

TECHNICAL FIELD

The present invention relates to a non-aqueous electrolyte and a non-aqueous electrolyte secondary battery.

BACKGROUND ART

In recent years, small electronic devices represented by mobile terminals have become widely used, and further size reduction, weight reduction, and lifetime extension are strongly required. For such market requirements, in particular, development of a small, lightweight secondary battery that can yield high energy density is in progress. This secondary battery is investigated to be applied for not only small electronic devices but also large electronic devices represented by automobiles, and additionally power storage systems represented by a house.

Among these, a lithium-ion secondary battery is highly promising because the size reduction and increase in capacity can be easily achieved, and it can yield higher energy density than a lead battery or a nickel-cadmium battery.

The lithium-ion secondary battery has a positive electrode, a negative electrode, a separator, and an electrolyte liquid, and the negative electrode contains a negative electrode active material, which is involved with charge-discharge reactions.

For this negative electrode active material, a carbon-based active material is widely used, and meanwhile, the recent market demands have required further increase in a battery capacity. For increasing the battery capacity, use of silicon as a material for the negative electrode active material is investigated. This is because a theoretical capacity of silicon (4199 mAh/g) is ten times or more higher than a theoretical capacity of graphite (372 mAh/g), and thereby remarkable increase in the battery capacity can be expected. The development of the silicon material as the negative electrode active material. Development of the silicon material as the material for the negative electrode active material is investigated on not only a silicon single substance but also compounds, etc. represented by an alloy and an oxide. A form of the negative electrode active material is investigated from an applying type, which is standard for the carbon-based active material, to an integrated type in which the active material is directly deposited on a current collector.

However, use of silicon as a main raw material of the negative electrode active material causes the negative electrode active material to expand and contract during charge and discharge, easily leading to cracking mainly near a surface layer of the negative electrode active material. In addition, an ionic substance is generated inside the negative electrode active material, which causes the negative electrode active material to be a fragile substance. Cracking of the surface layer of the negative electrode active material consequently generates a new surface to increase a reaction area of the negative electrode active material. In this time, a decomposition reaction of the electrolyte liquid occurs on the new surface, and a coating being a decomposed product of the electrolyte liquid is formed on the new surface to consume the electrolyte liquid. Therefore, cycle characteristics are likely to be deteriorated.

There have been various investigations so far on the negative electrode material for the lithium-ion secondary battery with the silicon-based material as a main material and electrode constitution in order to improve battery initial efficiency and the cycle characteristics.

Specifically, silicon and amorphous silicon dioxide are simultaneously deposited by using a gas phase method for a purpose of obtaining good cycle characteristics and high safety (see Patent Document 1, for example). To obtain a high battery capacity and safety, a carbon material (electron conductive material) is provided on a surface layer of a silicon oxide particle (see Patent Document 2, for example). To improve the cycle characteristics and to obtain high input-output characteristics, an active material containing silicon and oxygen is produced, and an active material layer having a higher oxygen proportion near a current collector is formed (see Patent Document 3, for example). To improve the cycle characteristics, a negative electrode is formed so that a silicon active material contains oxygen, an average oxygen content is 40 at% or less, and an oxygen content becomes large near a current collector (see Patent Document 4, for example).

As an electrolyte liquid additive to inhibit decomposition reactions of the electrolyte liquid with charge and discharge of the silicon active material, use of fluoroethylene carbonate (FEC) is reported (see Patent Document 5, for example). Since the fluorine-based electrolyte liquid forms a stable solid electrolyte interphase (SEI) film on a silicon surface, such an electrolyte liquid can inhibit deterioration of the silicon material.

CITATION LIST

PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2006-134719 A

## SUMMARY OF INVENTION

### TECHNICAL PROBLEM

As noted above, the small electronic devices represented by mobile terminals have had higher performance and more functions in recent years, and the lithium-ion secondary battery, which is a main power source therefor, has required to increase the battery capacity. As one technique to solve this problem, there has been a demand for development of a lithium-ion secondary battery composed of a negative electrode using a silicon material as a main material. The lithium-ion secondary battery using the silicon material is desired to have cycle characteristics comparable to those of a lithium-ion secondary battery using a carbon-based active material. Accordingly, a fluorine-based additive has been developed, and the battery characteristics has tended to be improved. However, repeated charge and discharge consume the fluorine-based solvent to increase a decomposed product of the electrolyte liquid deposited on a surface of the silicon material, and lithium moving reversibly is deactivated with incorporation into the decomposed product to deteriorate the battery cycle characteristics. In addition, a battery cell expands due to a swelling phenomenon, and the battery characteristics are insufficient compared with those of a battery using the carbon-based active material.

The present invention has been made in view of the above problems. An object of the present invention is to provide a non-aqueous electrolyte and a non-aqueous electrolyte secondary battery in which a battery cell hardly expands even when a negative electrode material such as a silicon material is used.

### SOLUTION TO PROBLEM

To solve the above problem, the present invention provides a non-aqueous electrolyte used for a non-aqueous electrolyte secondary battery in which a negative electrode contains at least any of a silicon compound, a germanium compound, and a tin compound as a negative electrode active material particle, the non-aqueous electrolyte comprising a silane compound represented by the following general formula (1):

$$Si(R^1)_l(R^2)_m(R^3)_{4-l-m} \qquad (1)$$

wherein $R^1$ represents an aryl group in which a part or all of hydrogen atoms in an aryl group having 6 to 20 carbon atoms are substituted with a fluorine atom or a fluoroalkyl group; $R^2$ represents an alkenyl group or alkynyl group having 2 to 20 carbon atoms; $R^3$ represents an alkyl group having 1 to 20 carbon atoms; and "l" and "m" each independently represent an integer of 1 to 3, provided that $2 \leq 1+m \leq 4$ is satisfied.

Such a silane compound has high electron acceptability and an excellent reductive decomposability on the negative electrode surface, and thereby has a feature of forming the coating (SEI film) on the negative electrode surface. Therefore, when the non-aqueous electrolyte of the present invention is used for the non-aqueous electrolyte secondary battery having the negative electrode containing at least any of a silicon compound, a germanium compound, and a tin compound as a negative electrode active material particle, sufficient battery cycle characteristics can be achieved while using these negative electrode materials, and battery expansion can be inhibited.

In this case, the silane compound represented by the general formula (1) preferably has a lowest unoccupied orbital energy level of -0.40 eV or lower.

Such an energy level facilitates the reductive decomposition of the silane compound.

The silane compound represented by the general formula (1) preferably has a highest occupied orbital energy level of -8.8 eV or higher.

Such an energy level improves reactivity after the reductive decomposition, specifically radical reactivity, and easily yields a good coating (SEI film).

A content of the silane compound represented by the general formula (1) contained in the non-aqueous electrolyte is preferably 0.1 mass% to 10.0 mass%.

Such a content easily forms a sufficient coating (SEI film), and easily inhibits expansion of the battery cell. Such a content also easily prevents increase in resistance due to excessive formation of the coating (SEI film).

In the non-aqueous electrolyte of the present invention, the negative electrode active material particle in the negative electrode may contain a silicon oxide particle coated with a carbon layer, and the silicon oxide particle may contain $Li_2SiO_3$ which is crystalline.

The non-aqueous electrolyte of the present invention can be particularly suitably used when the negative electrode active material in the negative electrode is as above.

In this case, before the negative electrode active material particle is charged and discharged, the negative electrode active material particle preferably has a peak derived from a Si (111) crystal plane obtained by X-ray diffraction using Cu-Kα ray, a crystallite size corresponding to the crystal plane is preferably 5.0 nm or less, and a ratio A/B of an intensity A of the peak derived from the Si (111) crystal plane relative to an intensity B of a peak derived from a $Li_2SiO_3$ (111) crystal plane preferably satisfies the following formula (2):

$$0.4 \leq A/B \leq 1.0 \quad ...(2).$$

Such a negative electrode active material particle can exhibit high slurry stability without impairing easiness of conversion from $Li_2SiO_3$ into $Li_4SiO_4$. Thus, the non-aqueous electrolyte of the present invention can be suitably used for the non-aqueous electrolyte secondary battery using the negative electrode containing such a negative electrode active material particle.

In the non-aqueous electrolyte of the present invention, when a potential of $Li/Li^+$ is a 0-V standard, the silane compound represented by the general formula (1) is preferably decomposed to form a coating on the negative electrode within a range of 0.23 V or higher.

Such a silane compound has a feature of decomposition at a high potential of 0.23 V or higher to form the coating (SEI film) on the negative electrode surface, and thereby suitably usable for the non-aqueous electrolyte secondary battery containing at least any of a silicon compound, a germanium compound, and a tin compound as a negative electrode active material particle having a capacity on a higher potential side.

The coating formed by decomposition of the silane compound represented by the general formula (1) preferably has a stable state within a range of 0.70 V or higher when the potential of $Li/Li^+$ is the 0-V standard.

When the coating being a decomposed product of the silane compound is stable and not decomposed within the range of 0.70 V or higher as above, the effect of inhibiting expansion of the battery cell is easily obtained even when the negative electrode having a capacity on a high potential side is used.

The present invention also provides a non-aqueous electrolyte secondary battery including a positive electrode, a negative electrode, and the above non-aqueous electrolyte.

Since such a non-aqueous electrolyte secondary battery is a non-aqueous electrolyte secondary battery comprising the non-aqueous electrolyte of the present invention, the non-aqueous electrolyte secondary battery can exhibit sufficient battery cycle characteristics and can inhibit the battery expansion.

## ADVANTAGEOUS EFFECTS OF INVENTION

The silane compound contained in the non-aqueous electrolyte of the present invention and represented by the general formula (1) has high electron acceptability and the excellent reductive decomposability on the negative electrode surface, and thereby has the feature of forming the coating (SEI film) on the negative electrode surface. Therefore, when the non-aqueous electrolyte of the present invention is used for the non-aqueous electrolyte secondary battery having the negative electrode containing at least any of a silicon compound, a germanium compound, and a tin compound as a negative electrode active material particle, the non-aqueous electrolyte of the present invention can achieve the sufficient battery cycle characteristics while using these negative electrode materials, and can inhibit the battery expansion.

## DESCRIPTION OF EMBODIMENTS

As noted above, there has been demand for the non-aqueous electrolyte and the non-aqueous electrolyte secondary battery that can achieve the sufficient battery cycle characteristics even when the silicon-based negative electrode material is used.

The present inventors have made earnest study to achieve the above object, and consequently found that the above object can be achieved by introducing a functional group containing a fluorine-containing aromatic compound into a silane compound and by further introducing an alkenyl group or an alkynyl group. This finding has led to completion of the present invention.

Specifically, the present invention is a non-aqueous electrolyte used for a non-aqueous electrolyte secondary battery in which a negative electrode contains at least any of a silicon compound, a germanium compound, and a tin compound as a negative electrode active material particle, the non-aqueous electrolyte comprising a silane compound represented by the following general formula (1):

$$Si(R^1)_l(R^2)_m(R^3)_{4-l-m} \qquad (1)$$

wherein $R^1$ represents an aryl group in which a part or all of hydrogen atoms in an aryl group having 6 to 20 carbon atoms are substituted with a fluorine atom or a fluoroalkyl group; $R^2$ represents an alkenyl group or alkynyl group having 2 to 20 carbon atoms; $R^3$ represents an alkyl group having 1 to 20 carbon atoms; and "l" and "m" each independently represent an integer of 1 to 3, provided that $2 \leq 1+m \leq 4$ is satisfied.

Hereinafter, embodiments of the present invention will be described, but the present invention is not limited thereto.

<Silane Compound>

As noted above, the non-aqueous electrolyte of the present invention contains a silane compound represented by the following general formula (1) (hereinafter, also referred to as "the compound (1)").

$$Si(R^1)_l(R^2)_m(R^3)_{4-l-m} \qquad (1)$$

In the general formula (1), $R^1$ represents an aryl group in which a part or all of hydrogen atoms in an aryl group having 6 to 20, preferably 6 to 12, and more preferably 6 to 8 carbon atoms are substituted with a fluorine atom or a fluoroalkyl group.

Specific examples of the aryl group of $R^1$ in which a part or all of hydrogen atoms in the aryl group are substituted with a fluorine atom or a fluoroalkyl group include: aryl groups in which a part or all of hydrogen atoms in the aryl group are substituted with a fluorine atom, such as a 2-fluorophenyl group, a 3-fluorophenyl group, a 4-fluorophenyl group, a 2,3-difluorophenyl group, a 2,4-difluorophenyl group, a 2,5-difluorophenyl group, a 2,6-difluorophenyl group, a 3,4-difluorophenyl group, a 3,5-difluorophenyl group, a 2,3,4-trifluorophenyl group, a 2,3,5-trifluorophenyl group, a 2,3,6-trifluorophenyl group, a 2,4,5-trifluorophenyl group, a 2,4,6-trifluorophenyl group, a 2,3,4,5-tetrafluorophenyl group, a 2,3,4,6-tetrafluorophenyl group, a 2,3,5,6-tetrafluorophenyl group, and pentafluorophenyl group; and aryl groups in which a part or all of hydrogen atoms in the aryl group are substituted with a fluoroalkyl group, such as a 2-trifluoromethylphenyl group, a 3-trifluoromethylphenyl group, a 4-trifluoromethylphenyl group, a 2,3-bis(trifluoromethyl)phenyl group, a 2,4-bis(trifluoromethyl)phenyl group, a 2,5-bis(trifluoromethyl)phenyl group, a 2,6-bis(trifluoromethyl)phenyl group, a 3,4-bis(trifluoromethyl)phenyl group, a 3,5-bis(trifluoromethyl)phenyl group, a 2,3,4-tris(trifluoromethyl)phenyl group, a 2,3,5-tris(trifluoromethyl)phenyl group, a 2,3,6-tris(trifluoromethyl)phenyl group, a 2,4,5-tris(trifluoromethyl)phenyl group, and a 2,4,6-tris(trifluoromethyl)phenyl group.

Among these, a 2-fluorophenyl group, a 3-fluorophenyl group, a 4-fluorophenyl group, a 2-trifluoromethylphenyl group, a 3-trifluoromethylphenyl group, and a 4-trifluoromethylphenyl group are preferable from the viewpoint of remarkably increasing electron acceptability of the silane compound to increase reductive decomposability.

In the general formula (1), $R^2$ represents an alkenyl group or alkynyl group having 2 to 20, preferably 2 to 10, and more preferably 2 to 5 carbon atoms.

Specific examples of the alkenyl group of $R^2$ include linear alkenyl groups such as a vinyl group, an n-propenyl group, an n-butenyl group, an n-pentenyl group, an n-hexenyl group, an n-heptenyl group, an n-octenyl group, an n-nonenyl group, an n-decenyl group, an n-undecenyl group, and an n-dodecenyl group; and branched alkenyl groups such as an isopropenyl group, an isobutenyl group, an isopentenyl group, an isohexenyl group, an isoheptenyl group, an isooctenyl group, an isononyl group, an isodecenyl group, and an isoundecyl group.

Among these, a vinyl group and an n-propenyl group are preferable from the viewpoint of improvement of the reductive decomposability of the silane compound and promotion of a polymerization reaction between the silane compounds or between the silane compound and another additive to improve strength and decomposition resistance of the coating (SEI film).

Specific examples of the alkynyl group of $R^2$ include linear alkynyl groups such as an ethynyl group, a 1-propynyl group, a 1-butynyl group, a 1-pentynyl group, a 1-hexynyl group, a 1-heptynyl group, a 1-octynyl group, a 1-nonynyl group, a 1-decynyl group, a 1-undecynyl group, and a 1-dodecynyl group; and branched alkynyl groups such as a 3-methyl-1-butynyl group, a 3,3-dimethyl-1-butynyl group, a 3-methyl-1-pentynyl group, a 4-methyl-1-pentynyl group, a 3,3-dimethyl-1-pentynyl group, a 3,4-dimethyl-1-pentynyl group, and a 4,4-dimethyl-1-pentynyl group.

Among these, an ethynyl group, a 1-propynyl group, and a 1-butynyl group are preferable from the viewpoint of improvement of the reductive decomposability of the silane compound and promotion of a polymerization reaction between the silane compounds or between the silane compound and another additive to improve strength and decomposition resistance of the coating (SEI film).

In the general formula (1), $R^3$ represents an alkyl group having 1 to 20, preferably 1 to 10, and more preferably 1 to 5 carbon atoms.

Specific examples of the alkyl group of $R^3$ include linear alkyl groups such as a methyl group, an ethyl group,

an n-propyl group, an n-butyl group, an n-pentyl group, an n-hexyl group, an n-heptyl group, an n-octyl group, an n-nonyl group, an n-decyl group, an n-undecyl group, and an n-dodecyl group; and branched alkyl groups such as an isopropyl group, an isobutyl group, a sec-butyl group, a tert-butyl group, an isopentyl group, a neopentyl group, an isohexyl group, an isoheptyl group, an isooctyl group, a tert-octyl group, an isononyl group, an isodecyl group, and an isoundecyl group.

Among these, a methyl group is preferred in view of promoting reaction between the silane compounds and its small steric hindrance.

In the general formula (1), "l" and "m" each independently represent an integer of 1 to 3, provided that $2 \leq l+m \leq 4$ is satisfied. From the viewpoint of improvement of the reductive decomposability of the silane compound, "l" and "m" in the general formula (1) more preferably each independently represent an integer of 1 to 3, provided that $l+m=4$ is satisfied.

Specific examples of the compound (1) include 2-fluorophenyltrivinylsilane, bis(2-fluorophenyl)divinylsilane, tris(2-fluorophenyl)vinylsilane, 3-fluorophenyltrivinylsilane, bis(3-fluorophenyl)divinylsilane, tris(3-fluorophenyl)vinylsilane, 4-fluorophenyltrivinylsilane, bis(4-fluorophenyl)divinylsilane, tris(4-fluorophenyl)vinylsilane, 2-fluorophenyltriethynylsilane, bis(2-fluorophenyl)diethynylsilane, ethynyltris(2-fluorophenyl)silane, 3-fluorophenyltriethynylsilane, bis(3-fluorophenyl)diethynylsilane, ethynyltris(3-fluorophenyl)silane, 4-fluorophenyltriethynylsilane, bis(4-fluorophenyl)diethynylsilane, ethynyltris(4-fluorophenyl)silane, 2-trifluoromethylphenyltrivinylsilane, bis(2-trifluoromethylphenyl)divinylsilane, tris(2-trifluoromethylphenyl)vinylsilane, 3-trifluoromethylphenyltrivinylsilane, bis(3-trifluoromethylphenyl)divinylsilane, tris(3-trifluoromethylphenyl)vinylsilane, 4-trifluoromethylphenyltrivinylsilane, bis(4-trifluoromethylphenyl)divinylsilane, tris(4-trifluoromethylphenyl)vinylsilane, triethynyl-2-trifluoromethylphenylsilane, bis(2-trifluoromethylphenyl)diethynylsilane, ethynyltris(2-trifluoromethylphenyl)silane, triethynyl-3-trifluoromethylphenylsilane, bis(3-trifluoromethylphenyl)diethynylsilane, ethynyltris(3-trifluoromethylphenyl)silane, triethynyl-4-trifluoromethylphenylsilane, bis(4-trifluoromethylphenyl)diethynylsilane, ethynyltris(4-trifluoromethylphenyl)silane, 2-fluorophenyldivinylmethylsilane, bis(2-fluorophenyl)methylvinylsilane, 3-fluorophenyldivinylmethylsilane, bis(3-fluorophenyl)methylvinylsilane, 4-fluorophenyldivinylmethylsilane, bis(4-fluorophenyl)methylvinylsilane, divinylmethyl-2-trifluoromethylphenylsilane, bis(2-trifluoromethylphenyl)methylvinylsilane, divinylmethyl-3-trifluoromethylphenylsilane, bis(3-trifluoromethylphenyl)methylvinylsilane, divinylmethyl-4-trifluoromethylphenylsilane, and bis(4-trifluoromethylphenyl)methylvinylsilane.

The silane compound represented by the general formula (1) can be obtained by, for example, reaction between: a vinylhalosilane; and a fluoroarylmagnesium halide or a fluoroaryllithium.

Content in Non-Aqueous Electrolyte

A content of the compound (1) in the non-aqueous electrolyte is preferably 0.1 mass% to 10.0 mass%, more preferably 0.1 mass% to 8.0 mass%, further preferably 0.1 mass% to 6.0 mass%, and particularly preferably 1.0 mass% to 5.0 mass%. Such a content easily forms the sufficient coating (SEI film), and easily inhibits the expansion of the battery cell. In addition, such a content easily prevents increase in resistance due to excessive formation of the coating (SEI film).

Lowest Unoccupied Molecular Orbital (LUMO) Energy Level

A lowest unoccupied molecular orbital (LUMO) energy level of the silane compound (the compound (1)) is preferably -0.40 eV or lower, more preferably -0.70 eV or lower, further preferably -0.90 eV or lower, and particularly preferably -1.0 eV or lower. With such an energy level, the silane compound is easily reductive-decomposed.

Highest Occupied Molecular Orbital (HOMO) Energy Level

A highest occupied molecular orbital (HOMO) energy level of the silane compound (the compound (1)) is preferably -8.8 eV or higher, more preferably -8.5 eV or higher, more preferably -8.0 eV or higher, and particularly preferably -7.8 eV or higher. With such an energy level, reactivity after the reductive decomposition, specifically radical reactivity, is improved, and the good coating (SEI film) is easily obtained.

Method for Calculating Energy Level

The energy levels of the lowest unoccupied molecular orbital (LUMO) and the highest occupied molecular orbital (HOMO) can be determined by quantum chemical calculation. As a software for the quantum chemical calculation, Gaussian, GAMESS, or the like can be used. As a calculation method, a density functional method is suitably used in view of the calculation accuracy and calculation cost. As an exchange-correlation functional, B3LYP is suitably used. As a basis function, 6-311+G(d,p) is suitably used.

Decomposition Potential of Silane Compound

The silane compound contained in the non-aqueous electrolyte of the present invention has the feature of decomposition at a relatively high potential. Thus, to obtain a sufficient effect of inhibiting the expansion of the battery cell, the negative electrode containing any of the silicon compound, the germanium compound, and the tin compound that have a capacity on a high potential side is necessarily used. With a graphite negative electrode, which has no capacity at 0.24 V or higher relative to a potential of $Li/Li^+$ being a standard (0 V), the silane compound is not sufficiently decomposed, and the effect of inhibiting the expansion of the battery cell cannot be obtained. Thus, the present invention has a premise of the non-aqueous electrolyte used for non-aqueous electrolyte secondary battery in which a negative electrode contains at least any of a silicon compound, a germanium compound, and a tin compound as a negative electrode active material particle. Hereinafter, the potential is relative to the potential of $Li/Li^+$ being the 0-V standard.

The decomposition potential (relative to the potential of $Li/Li^+$ being a standard (0 V)) of the silane compound contained in the non-aqueous electrolyte of the present invention is preferably 0.23 to 0.70 V, more preferably 0.25 to 0.60 V, further preferably 0.27 to 0.55 V, and particularly preferably 0.30 to 0.50 V. Such a decomposition potential easily yields the coating (SEI film) that inhibits the expansion of the battery cell. The decomposition potential of the silane compound can be measured by, for example, cyclic voltammetry (CV).

Decomposition Potential of Silane Compound Decomposed Product (Coating)

The silane compound contained in the non-aqueous electrolyte of the present invention is decomposed to form the coating (SEI film). Such a decomposed product (coating) preferably has a stable state (not decomposed) at 0.70 V or higher. The decomposed product that is not decomposed at the above potential easily yields the effect of inhibiting the expansion of the battery cell even when the negative electrode having a capacity on a high potential side is used. Particularly, the negative electrode containing an oxide of silicon has much capacity at 0.7 V or higher, and thereby such a negative electrode has good compatibility with the silane compound contained in the non-aqueous electrolyte of the present invention.

The silane compound contained in the non-aqueous electrolyte of the present invention and represented by the general formula (1) has high electron acceptability and an excellent reductive decomposability on the negative electrode surface. Specifically, the silane compound has the feature of decomposition at a high potential of 0.23 V or higher to form the coating (SEI film) on the negative electrode surface. Thus, the silane compound is used for protecting the negative electrode having a capacity on a high potential side of 0.23 V or higher, and particularly has good compatibility with the negative electrode using the silicon material as a main material.

The silane compound contained in the non-aqueous electrolyte of the present invention has a plurality of silicon atoms and a structure with rich reactivity, and thereby easily forms the good coating (SEI film), specifically the coating (SEI film) having excellent strength and decomposition resistance after the reductive decomposition.

Such a coating (SEI film) hardly breaks even with repeated charge and discharge, and can inhibit further decomposition of the electrolyte liquid (for example, a solvent, an additive, etc.). As a result, the expansion of the battery cell due to a swelling phenomenon can be inhibited.

The silane compound contained in the non-aqueous electrolyte of the present invention has a fluoro group, which makes strong interaction with silicon, and thereby the silane compound effectively protects particularly a Li silicate portion to constitute the silicon-based negative electrode active material, and can form the stable coating (SEI film) also with $Li_2SiO_3$ and $Li_4SiO_4$, which is formed by conversion of $Li_2SiO_3$.

It is known that the Li silicate portion is decomposed at a high potential of 0.7 V or higher, but the coating (SEI film) formed with the silane compound contained in the non-aqueous electrolyte of the present invention has excellent decomposition resistance at a high potential, and thereby can inhibit the decomposition of the Li silicate.

<Non-aqueous Electrolyte Secondary Battery>

Non-aqueous Electrolyte

The non-aqueous electrolyte of the present invention is prepared by dissolving an electrolyte salt in a non-aqueous solvent, contains the compound (1), and may contain other materials as an additive. At least a part of an active material layer or the separator is impregnated with the non-aqueous electrolyte.

Examples of the non-aqueous solvent include ethylene carbonate, propylene carbonate, butylene carbonate, dimethyl carbonate, diethyl carbonate, ethyl methyl carbonate, methyl propyl carbonate, 1,2-dimethoxyethane, or tetrahydrofuran. Among these, in view of providing better properties, it is desirable to use at least one or more of ethylene carbonate, propylene carbonate, dimethyl carbonate, diethyl carbonate, and ethyl methyl carbonate. Moreover, in this case, by combinedly using a high viscosity solvent such as ethylene carbonate or propylene carbonate, and a low

viscosity solvent such as dimethyl carbonate dimethyl carbonate, ethyl methyl carbonate, or diethyl carbonate, dissociation property or ionic mobility of the electrolyte salt is improved. Thus, superior properties can be obtained.

In the case when an alloy-based negative electrode containing a silicon-based negative electrode material is used, at least one of a halogenated chain carbonate ester or halogenated cyclic carbonate ester is preferably contained, particularly as a solvent. Thereby, during charge and discharge, especially during charging, a stable coating film is formed on the surface of the negative electrode active material. Herein, the halogenated chain carbonate ester refers to a chain carbonate ester containing a halogen as a constituent element (at least one hydrogen is substituted with a halogen). In addition, the halogenated cyclic carbonate ester refers to a cyclic carbonate ester containing a halogen as a constituent element (i.e., at least one hydrogen is substituted with a halogen).

The type of the halogen is not particularly limited, and fluorine is preferred in view of forming a coating film having better quality as compared with other halogens. The larger the number of halogens, the more desirable, because more stable coating film can be obtained, and decomposition reaction of the electrolyte liquid is reduced.

Examples of the halogenated chain carbonate ester include fluoromethyl methyl carbonate and difluoromethyl methyl carbonate. Examples of the halogenated cyclic carbonate ester include 4-fluoro-1,3-dioxolan-2-on, and 4,5-difluoro-1,3-dioxolan-2-on.

Examples of the electrolyte salt include any one or more of light metal salts such as a lithium salt. Examples of the lithium salt include lithium hexafluorophosphate ($LiPF_6$) and lithium tetrafluoroborate ($LiBF_4$).

A content of the electrolyte salt in the non-aqueous solvent is preferably 0.5 mol/kg or more and 2.5 mol/kg or less, more preferably 0.8 mol/kg or more and 2.0 mol/kg or less, and further preferably 0.8 mol/kg or more and 1.5 mol/kg or less, in view of providing high ionic conductivity.

The non-aqueous electrolyte of the present invention may contain an unsaturated carbon bond cyclic carbonate ester, sultone (cyclic sulfonate ester), and an acid anhydride as additional additives other than the compound (1). The unsaturated carbon bond cyclic carbonate ester may be contained in view of forming a stable coating film shape on the surface of the negative electrode during charge and discharge, and suppressing decomposition reaction of the non-aqueous electrolyte. Examples thereof include vinylene carbonate and vinylethylene carbonate. Further, the sultone may be contained in view of improving the chemical stability of battery. Examples thereof include propanesultone and propenesultone. In addition, the acid anhydride may be contained in view of improving the chemical stability of the electrolyte. Examples thereof include propanedisulfonic acid anhydride.

The non-aqueous electrolyte secondary battery of the present invention includes a positive electrode and a negative electrode, in addition to the above non-aqueous electrolyte.

Positive Electrode

The positive electrode is configured to have a positive electrode active material layer on both sides or one side of a positive electrode current collector, for example.

Herein, the positive electrode current collector is formed of, for example, an electroconductive material such as aluminum.

On the other hand, the positive electrode active material layer contains any one or two or more positive electrode materials capable of absorbing and desorbing lithium ions. Other materials such as a binder, conductive assistant, and dispersant may also be contained according to the design. In this case, as the binder and conductive assistant, for example, the same ones as those used as the negative electrode binder and negative electrode conductive assistant described below may be used.

Examples of the positive electrode material include a composite oxide containing lithium and a transition metal element, and a lithium-containing compound such as a phosphate compound containing lithium and a transition metal element, in view of providing high battery capacity and excellent cycle characteristics. The transition metal element is preferably nickel, iron, manganese, or cobalt. The lithium-containing compound is a compound containing at least one or more of these transition metal elements. The chemical formula of the lithium-containing compound is represented by, for example, $LixM1O_2$ or $LiyM_2PO_4$. In the formula, M1 and M2 represent at least one or more transition metal elements. The values of "x" and "y" are different depending on the battery charge and discharge state, and typically are numbers satisfying $0.05 \leq x \leq 1.10$ and $0.05 \leq y \leq 1.10$.

Specific examples of the composite oxide containing lithium and a transition metal element include a lithium cobalt composite oxide ($Li_xCoO_2$), a lithium nickel composite oxide ($Li_xNiO_2$), a lithium nickel cobalt composite oxide, and a lithium nickel cobalt composite oxide (a lithium nickel cobalt aluminum composite oxide; NCA, a lithium nickel cobalt manganese composite oxide +

NCM) .

Specific examples of the phosphate compound containing lithium and a transition metal element include a

lithium iron phosphate compound ($LiFePO_4$) and a lithium iron manganese phosphate compound ($LiFe_{1-u}Mn_uPO_4$, provided that 0<u<1). When these positive electrode materials are used, high battery capacity can be obtained, and also excellent cycle characteristics can be obtained.

Negative Electrode

The negative electrode is configured to have a negative electrode active material layer on a negative electrode current collector, for example. The negative electrode active material layer may be provided on both sides or only one side of the negative electrode current collector.

Negative Electrode Current Collector

The negative electrode current collector is constituted of an excellent electroconductive material having high mechanical strength. Examples of the electroconductive material which can be used for the negative electrode current collector include copper (Cu) and nickel (Ni). The electroconductive material is preferably a material which does not form an intermetallic compound with lithium (Li).

The negative electrode current collector preferably contains carbon (C) and sulfur (S) other than the copper (Cu) and nickel (Ni) in view of improving the physical strength of the negative electrode current collector. Particularly, in the case when an active material layer expanding during charging is included, inclusion of the above element in the current collector has an effect of suppressing deformation of electrode including the current collector. A content of the above contained element is not particularly limited, and in view of providing higher deformation suppressing effect, each of the content is preferably 100 mass ppm or less. By such deformation suppressing effect, cycle characteristics can be more improved.

The surface of the negative electrode current collector may be roughened or may not be roughened. Examples of the roughened negative electrode current collector include a metal foil which has been subjected to electrolytic treatment, embossing treatment, or chemical etching treatment. Examples of the unroughened negative electrode current collector include rolled metal foil.

Negative Electrode Active Material Layer

The negative electrode active material layer contains negative electrode active material capable of absorbing (inserting) and desorbing lithium ions. In view of battery design, the negative electrode active material layer may further contain other materials such as a negative electrode binder (binder) and a conductive assistant. The negative electrode active material contains the negative electrode active material particle, and the negative electrode active material particle contains at least any of a silicon compound particle (silicon-based negative electrode active material), a germanium compound particle (germanium-based negative electrode active material), and a tin compound particle (tin-based negative electrode active material). Among these, the negative electrode active material particle preferably contains the silicon compound particle, and particularly preferably contains a silicon compound particle containing a silicon compound containing oxygen.

The negative electrode active material contains at least any of the silicon compound particle (silicon-based negative electrode active material), the germanium compound particle (germanium-based negative electrode active material), and the tin compound particle (tin-based negative electrode active material). Among these, the negative electrode active material particle preferably contains the silicon compound particle, and particularly preferably contains a silicon oxide material (silicon compound containing oxygen). In the silicon compound $SiO_x$, "x" represents a compositional ratio between silicon and oxygen, and is preferably a number satisfying $0.8 \leq x \leq 1.2$ in view of the cycle characteristics and resistance of silicon oxide. Particularly, in the composition of $SiO_x$, "x" is preferably nearer to 1 for providing higher cycle characteristics. Note that the composition of the silicon compound in the present invention does not necessarily mean the purity of 100%, and a trace amount of impurity elements may be contained.

The silicon compound preferably contains as little crystalline Si as possible. Containing as little crystalline Si as possible can prevent reactivity to the electrolyte from becoming excessively high. As a result, it is possible to prevent worsening of battery characteristics.

The silicon compound contains Li, and desirably, a part of the silicon compound is silicate to form $Li_2SiO_3$. $Li_2SiO_3$ is crystalline, active in charging and discharging, and remains as $Li_2SiO_3$ in a slurry state, but changes into $Li_4SiO_4$ by repeated charge and discharge.

As the crystallinity of $Li_2SiO_3$ is higher, it is more difficult to be converted into $Li_4SiO_4$. On the other hand, when $Li_2SiO_3$ has low crystallinity, it is easily eluted into a slurry. Thus, there is an optimal range of crystallinity.

Specifically, the negative electrode active material particles have a peak caused by a Si(111) crystal plane before charge and discharge of the negative electrode active material particles, the peak being determined by X ray

diffraction using a Cu-Kα ray. The crystallite size corresponding to said crystal plane is 5.0 nm or less. And when an intensity of peak caused by the Si(111) crystal plane is represented by A, and an intensity of peak caused by a $Li_2SiO_3$(111) crystal plane is represented by B, the ratio A/B preferably satisfies the following formula (2).

$$0.4 \leq A/B \leq 1.0 \quad (2)$$

The expansion degree of Li silicate, and the crystallization degree of Si (for example, a crystallite size corresponding to the Si(111) crystal plane) can be observed by X-ray diffraction (hereinafter, also referred to as "XRD").

As an X-ray diffractometer, D8 ADVANCE manufactured by Bruker Corporation may be used. The measurement is performed by using a Cu Kα ray as an X ray source, and a Ni filter, with an output of 40 kV/40 mA, a slit width of 0.3°, and a step width of 0.008° for counting time of 0.15 seconds per step, to 10 to 40°.

The peak caused by the Si(111) crystal plane appears around 2θ=28.4° in an X-ray diffraction chart.

The crystallite size corresponding to the Si(111) crystal plane is preferably 5.0 nm or less, more preferably 4.0 nm or less, and still more preferably 2.5 nm or less. Desirably, the negative electrode active material particles are substantially amorphous.

The ratio of A/B, in which A represents the intensity of peak caused by the Si(111) crystal plane, and B represents the intensity of peak caused by the $Li_2SiO_3$(111) crystal plane, preferably satisfies 0.40≤A/B≤1.00, more preferably 0.45≤A/B≤0.75, and still more preferably 0.50≤A/B≤0.70. Herein, the peak caused by the $Li_2SiO_3$(111) crystal plane appears in the range of 2Θ=17° to 21° in the X-ray diffraction chart.

A median diameter of the negative electrode active material determined by a laser diffraction method is preferably 5.0 pm or more and 15.0 pm or less, more preferably 5.5 pm or more and 10.0 pm or less, and still more preferably 6.0 pm or more and 8.0 pm or less, in view of controlling reaction with the electrolyte or suppressing expansion of the negative electrode active material caused by charge and discharge.

The negative electrode active material layer may include mixed negative electrode active material containing the silicon-based negative electrode active material and a carbon-based active material. Thereby, it is possible to decrease electrical resistance of the negative electrode active material layer and relax expansion stress caused by charge. Examples of the carbon-based active material include natural graphite, artificial graphite, hard carbon, and soft carbon.

The negative electrode active material layer of the present invention contains the negative electrode active material of the present invention capable of absorbing and desorbing lithium ions. In view of battery design, the negative electrode active material layer may further contain other materials such as a negative electrode binder (binder) or a conductive assistant.

As the negative electrode binder, for example, any one or more of polymer materials, and synthetic rubbers may be used. Examples of the polymer material include polyvinylidene fluoride, polyimide, polyamide-imide, aramid, polyacrylic acid, lithium polyacrylate, sodium polyacrylate, and carboxymethylcellulose. Examples of the synthetic rubber include styrene-butadiene-based rubber, fluorine-based rubber, and ethylene propylene diene.

Examples of the negative electrode conductive assistant include carbon microparticles, carbon black, acetylene black, graphite, ketjen black, carbon nanotube, and carbon nanofiber. Any one or more of these may be used.

The negative electrode active material layer is formed by an application method, for example. The application method is a method of applying a mixture dispersed in an organic solvent, water, or the like; the mixture being obtained by mixing a silicon-based negative electrode active material, binder, and as necessary, negative electrode conductive assistant and carbon-based active material.

## Separator

The separator separates lithium metal or a positive electrode from a negative electrode, prevents electric short circuit caused by contact of both electrodes, and allows lithium ions to pass through. The separator is formed by, for example, a synthetic resin, or a porous film composed of ceramic, and may have a laminate structure in which two or more porous films are laminated. Examples of the synthetic resin include polytetrafluoroethylene, polypropylene, and polyethylene.

## EXAMPLE

Hereinafter, the present invention will be more specifically described with reference to Examples and Comparative Examples. However, the present invention is not limited thereto.

<Common Subject Matter in Examples and Comparative Example> HOMO and LUMO Energy Levels

The structure of the silane compound was optimized, and then HOMO and LUMO energy levels were calculated. Gaussian 16 was used as a software for quantum chemical calculation. Calculation was performed with the density functional method by using B3LYP as an exchange-correlation functional, and 6-311+G(d,p) as a basis function.

Cyclic Voltammetry

Ethylene carbonate (EC) and dimethyl carbonate (DMC) were mixed, and then a silane compound was dissolved to prepare an electrolyte liquid. The composition between EC and DMC was EC:DMC = 30:70 at a volume ratio, and the composition between the EC/DMC mixed solvent and the silane compound was the mixed solvent : the silane compound = 95:5 at a mass ratio. The obtained electrolyte liquid was subjected to a cyclic voltammetry (CV) measurement. A SUS 304 plate (immersion area: 3 $cm^2$) was used for a working electrode, a platinum wire was used for a counter electrode, and $Ag/Ag^+$ (internal solution: acetonitrile, 0.1 mol/L silver nitride, and 0.1 mol/L tetrabutylammonium perchlorate) was used for a reference electrode. The scanning rate was 50 mV/sec.

Example 1

Production of Negative Electrode

An electrolytic copper foil with 15 um thickness was used as a negative electrode current collector. The electrolytic copper foil contained carbon and sulfur at a concentration of 70 mass ppm, respectively.

A negative electrode mixture slurry was prepared by mixing KSC-7130 (silicon oxide particles containing $Li_2SiO_3$ and coated with carbon layers, median diameter of 6.5 pm, manufactured by Shin-Etsu Chemical Co., Ltd., refer to Journal of Power Sources 450(2020) 227699) as silicon-based negative electrode active material, artificial graphite (median diameter of 15 pm), carbon nanotube and carbon microparticles having a median diameter of about 50 nm as negative electrode conductive assistants, and sodium polyacrylate and carboxymethylcellulose as negative electrode binders at a dry mass ratio of 9.3:83.7:1:1:4:1, and then diluting the mixture with pure water.

The negative electrode mixture slurry was applied on the negative electrode current collector, and dried at 100°C for 1 hour in a vacuum atmosphere. An amount of negative electrode active material layer deposited per unit area (area density) on one side of the negative electrode after drying was 7.0 $mg/cm^2$.

Preparation of Non-Aqueous Electrolyte

Ethylene carbonate (EC) and dimethyl carbonate (DMC) were mixed as a non-aqueous solvent, and then lithium hexafluorophosphate: $LiPF_6$ was dissolved as an electrolyte salt into this mixed solvent to prepare an electrolyte. In this case, the composition of the solvents was EC:DMC = 30:70 by volume ratio, and a content of the electrolyte salt in the solvent was 1 mol/kg.

Into the prepared electrolyte, vinylene carbonate (VC) and bis(4-fluorophenyl)divinylsilane (hereinafter, referred to as "BFDVS") were added as additives for forming a coating at respectively 1.0 mass% and 0.1 mass% to prepare a non-aqueous electrolyte. Table 1 shows the structural formula of BFDVS.

Production of Non-Aqueous Electrolyte Secondary Battery

Then, a coin battery was assembled as follows. First, Li foil with 1 mm in thickness was punched to 16 mm in diameter, and adhered to an aluminum clad. The negative electrode obtained by the above method was punched to 15 mm in diameter, disposed opposite to the Li foil via a separator, the non-aqueous electrolyte obtained by the above method was injected, and then a 2032 coin battery being a non-aqueous electrolyte secondary battery was produced.

Evaluation of Battery

The produced coin battery was charged at a charge rate of equivalently 0.03 C with a CCCV mode (first charge). The CV was 0 V, and the termination current was 0.04 mA. Then, the coin battery was CC-discharged at a discharge rate of similarly 0.03 C and a discharge termination voltage of 1.2 V (first discharge).

To determine initial charge-discharge characteristics, first efficiency (hereinafter, also referred to as "initial efficiency") was calculated according to the following formula:

$$\text{First efficiency (\%)} = (\text{First discharge capacity} / \text{First charge capacity}) \times 100.$$

From the obtained initial efficiency data, a counter positive electrode was designed to evaluate the battery as follows.

Expansion Rate of Battery Cell (Evaluation of Swelling)

To stabilize the battery, under an atmosphere at 25°C, the battery was firstly charged and discharged at 0.2 C with two cycles, and then charged at 0.7 C and discharged at 0.5 C until the 500th cycle. At this time, a charge voltage was 4.3 V, discharge end voltage was 2.5 V, and charge termination rate was 0.07 C.

At a time of the discharge of the 500th cycle, a thickness of the battery cell was measured. Based on an initial thickness of the battery cell (5.5 mm in thickness, 34 mm in width, and 36 mm in length), an expansion rate of the battery cell was determined according to the following formula:

$$\text{Expansion rate (\%)} = (\text{Thickness at 500th cycle} / 5.5\ \text{mm}) \times 100.$$

Examples 2 to 20

The same procedure as in Example 1 was performed except that a type of the additive (silane compound) and its addition amount were changed as in Table 2. The structural formulae of the silane compounds are as shown in Table 1.

Examples 21 to 32

The silicon material was subjected to an additional thermal treatment to control crystallinity of Si and $Li_2SiO_3$, and the battery characteristics were determined. The temperature was regulated within a range of 600 to 700°C. The other procedures were performed in the same manner as in Example 1 except that a type of the additive (silane compound) and its addition amount were changed as in Table 2.

Comparative Example 1

The same procedure as in Example 1 was performed except that the additive (silane compound) was not added.

Comparative Examples 2 to 4

The same procedure as in Example 1 was performed except that a type of the additive (silane compound) and its addition amount were changed as in Table 2.

[Table 1]

| **Silane compound** | BFDVS | FTFDVS | BTFDVS | TFTVS | PHTVS |
|---|---|---|---|---|---|
| **Structural formula** | 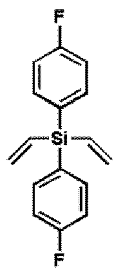 | 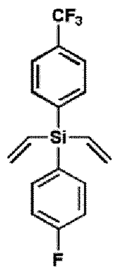 | 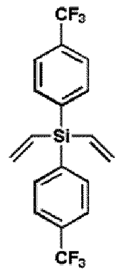 | 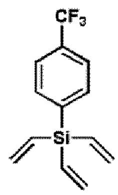 | 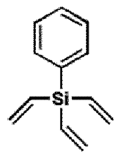 |

[Table 2]

| | Non-aqueous electrolyte | | Negative electrode | | | Quantum chemical calculation | | Battery evaluation |
|---|---|---|---|---|---|---|---|---|
| | Silane compound | Addition amount (mass%) | Type | Ratio between Si(111) and Li2SiO3 (111) | Si (111) | HOMO (eV) | LUMO (eV) | Swelling (%) |
| Example 1 | BFDVS | 0.1 | Li-SiO-C | 0.55 | amorphous | -7.0076 | -1.0662 | 22.0 |
| Example 2 | BFDVS | 2 | Li-SiO-C | 0.55 | amorphous | -7.0076 | -1.0662 | 16.8 |
| Example 3 | BFDVS | 5 | Li-SiO-C | 0.55 | amorphous | -7.0076 | -1.0662 | 16.4 |
| Example 4 | BFDVS | 10 | Li-SiO-C | 0.55 | amorphous | -7.0076 | -1.0662 | 15.5 |
| Example 5 | BFDVS | 15 | Li-SiO-C | 0.55 | amorphous | -7.0076 | -1.0662 | 15.3 |
| Example 6 | FT FDVS | 0.1 | Li-SiO-C | 0.55 | amorphous | -7.1712 | -1.6028 | 20.0 |
| Example 7 | FT FDVS | 2 | Li-SiO-C | 0.55 | amorphous | -7.1712 | -1.6028 | 15.1 |
| Example 8 | FT FDVS | 5 | Li-SiO-C | 0.55 | amorphous | -7.1712 | -1.6028 | 14.4 |
| Example 9 | FT FDVS | 10 | Li-SiO-C | 0.55 | amorphous | -7.1712 | -1.6028 | 14.0 |
| Example 10 | FT FDVS | 15 | Li-SiO-C | 0.55 | amorphous | -7.1712 | -1.6028 | 13.9 |
| Example 11 | BTFDVS | 0.1 | Li-SiO-C | 0.55 | amorphous | -7.6137 | -1.8771 | 18.5 |
| Example 12 | BTFDVS | 2 | Li-SiO-C | 0.55 | amorphous | -7.6137 | -1.8771 | 13.7 |
| Example 13 | BTFDVS | 5 | Li-SiO-C | 0.55 | amorphous | -7.6137 | -1.8771 | 13.1 |

(continued)

| | Non-aqueous electrolyte | | Negative electrode | | | Quantum chemical calculation | | Battery evaluation |
|---|---|---|---|---|---|---|---|---|
| | Silane compound | Addition amount (mass%) | Type | Ratio between Si(111) and Li2SiO3 (111) | Si (111) | HOMO (eV) | LUMO (eV) | Swelling (%) |
| Example 14 | BTFDVS | 10 | Li-SiO-C | 0.55 | amorphous | -7.6137 | -1.8771 | 12.5 |
| Example 15 | BTFDVS | 15 | Li-SiO-C | 0.55 | amorphous | -7.6137 | -1.8771 | 12.3 |
| Example 16 | TFTVS | 0.1 | Li-SiO-C | 0.55 | amorphous | -7.4890 | -1.5105 | 20.2 |
| Example 17 | TFTVS | 2 | Li-SiO-C | 0.55 | amorphous | -7.4890 | -1.5105 | 15.3 |
| Example 18 | TFTVS | 5 | Li-SiO-C | 0.55 | amorphous | -7.4890 | -1.5105 | 14.3 |
| Example 19 | TFTVS | 10 | Li-SiO-C | 0.55 | amorphous | -7.4890 | -1.5105 | 13.8 |
| Example 20 | TFTVS | 15 | Li-SiO-C | 0.55 | amorphous | -7.4890 | -1.5105 | 13.6 |
| Example 21 | BFDVS | 2 | Li-SiO-C | 1.52 | 7 nm | -7.0076 | -1.0662 | 20.1 |
| Example 22 | BFDVS | 2 | Li-SiO-C | 1.00 | 5 nm | -7.0076 | -1.0662 | 19.3 |
| Example 23 | BFDVS | 2 | Li-SiO-C | 1.67 | 9.2 nm | -7.0076 | -1.0662 | 20.4 |
| Example 24 | BFDVS | 2 | Li-SiO-C | 0.71 | 3.8 nm | -7.0076 | -1.0662 | 19.0 |
| Example 25 | BFDVS | 2 | Li-SiO-C | 0.67 | 2.2 nm | -7.0076 | -1.0662 | 18.8 |
| Example 26 | BFDVS | 2 | Li-SiO-C | 0.56 | 1.1 nm | -7.0076 | -1.0662 | 17.0 |

(continued)

| | Non-aqueous electrolyte | | Negative electrode | | | Quantum chemical calculation | | Battery evaluation |
|---|---|---|---|---|---|---|---|---|
| | Silane compound | Addition amount (mass%) | Type | Ratio between Si(111) and Li2SiO3 (111) | Si (111) | HOMO (eV) | LUMO (eV) | Swelling (%) |
| Example 27 | BTFDVS | 2 | Li-SiO-C | 1.52 | 7 nm | -7.6137 | -1.8771 | 17.3 |
| Example 28 | BTFDVS | 2 | Li-SiO-C | 1.00 | 5 nm | -7.6137 | -1.8771 | 16.0 |
| Example 29 | BTFDVS | 2 | Li-SiO-C | 1.67 | 9.2 nm | -7.6137 | -1.8771 | 17.5 |
| Example 30 | BTFDVS | 2 | Li-SiO-C | 0.71 | 3.8 nm | -7.6137 | -1.8771 | 15.2 |
| Example 31 | BTFDVS | 2 | Li-SiO-C | 0.67 | 2.2 nm | -7.6137 | -1.8771 | 14.7 |
| Example 32 | BTFDVS | 2 | Li-SiO-C | 0.56 | 1.1 nm | -7.6137 | -1.8771 | 14.0 |
| Comparative Example 1 | - | - | Li-SiO-C | 0.55 | amorphous | - | - | 23.1 |
| Comparative Example 2 | PHTVS | 0.1 | Li-SiO-C | 0.55 | amorphous | -6.9543 | -0.9086 | 23.1 |
| Comparative Example 3 | PHTVS | 2 | Li-SiO-C | 0.55 | amorphous | -6.9543 | -0.9086 | 23.0 |
| Comparative Example 4 | PHTVS | 5 | Li-SiO-C | 0.55 | amorphous | -6.9543 | -0.9086 | 23.0 |

Examples 33 to 34

Negative electrodes were produced in the same manner as in Example 1 by using SIE23PB (metal Si, Kojundo Chemical Laboratory Co., Ltd.) as the negative electrode active material. The other procedures were performed in the same manner as in Example 1 except that a type of the additive (silane compound) and its addition amount were changed as in Table 3.

Examples 35 to 36

Negative electrodes were produced in the same manner as in Example 1 by using powder of GEE05PB (germanium, Kojundo Chemical Laboratory Co., Ltd.), sieved with aperture in 20 um and recovered, as the negative electrode

active material. The other procedures were performed in the same manner as in Example 1 except that a type of the additive (silane compound) and its addition amount were changed as in Table 3.

Examples 37 to 38

Negative electrodes were produced in the same manner as in Example 1 by using powder of SNE08PB (tin, Kojundo Chemical Laboratory Co., Ltd.), sieved with aperture in 20 um and recovered, as the negative electrode active material. The other procedures were performed in the same manner as in Example 1 except that a type of the additive (silane compound) and its addition amount were changed as in Table 3.

Examples 39 to 40

Negative electrodes were produced in the same manner as in Example 1 by using powder of SNO07PB (tin oxide, Kojundo Chemical Laboratory Co., Ltd.), sieved with aperture in 20 um and recovered, as the negative electrode active material. The other procedures were performed in the same manner as in Example 1 except that a type of the additive (silane compound) and its addition amount were changed as in Table 3.

Comparative Examples 5 to 6

Negative electrodes were produced in the same manner as in Example 1 by using artificial graphite (median diameter: 15 um) as the negative electrode active material. The other procedures were performed in the same manner as in Example 1 except that a type of the additive (silane compound) and its addition amount were changed as in Table 3.

Comparative Examples 7 to 11

The same procedure as in Example 1 was performed except that the negative electrode active material was changed as in Table 3 and that the additive (silane compound) was not added.

[Table 3]

| | Non-aqueous electrolyte | | Negative electrode | Quantum chemical calculation | | Battery evaluation |
|---|---|---|---|---|---|---|
| | Silane compound | Addition amount (mass%) | Type | HOMO (eV) | LUMO (eV) | Swelling (%) |
| Example 33 | BFDVS | 2 | metal Si | -7.0076 | -1.0662 | 27.3 |
| Example 34 | BTFDVS | 2 | metal Si | -7.6137 | -1.8771 | 24.1 |
| Example 35 | BFDVS | 2 | Ge | -7.0076 | -1.0662 | 27.5 |
| Example 36 | BTFDVS | 2 | Ge | -7.6137 | -1.8771 | 24.4 |
| Example 37 | BFDVS | 2 | Sn | -7.0076 | -1.0662 | 27.4 |
| Example 38 | BTFDVS | 2 | Sn | -7.6137 | -1.8771 | 24.2 |
| Example 39 | BFDVS | 2 | SnO | -7.0076 | -1.0662 | 22.1 |
| Example 40 | BTFDVS | 2 | SnO | -7.6137 | -1.8771 | 18.9 |
| Comparative Example 5 | BFDVS | 2 | C | -7.0076 | -1.0662 | 5.2 |
| Comparative Example 6 | BTFDVS | 2 | C | -7.6137 | -1.8771 | 5.0 |
| Comparative Example 7 | - | - | metal Si | - | - | 34.2 |
| Comparative Example 8 | - | - | Ge | - | - | 34.3 |
| Comparative Example 9 | - | - | Sn | - | - | 34.1 |
| Comparative Example 10 | - | - | SnO | - | - | 28.0 |
| Comparative Example 11 | - | - | C | - | - | 5.3 |

As is obvious from the results in Table 2, it was confirmed that the expansion of the battery cell was inhibited by adding the silane compound containing the fluorine-containing aromatic compound and contained in the non-aqueous electrolyte of the present invention. Particularly, this inhibition is advantageous in terms of the sufficient effect of inhibiting the expansion without addition of fluoroethylene carbonate (FEC). In addition, it was exhibited that lowering the thermal treatment temperature of the silicon material tended to inhibit crystallization of Si to improve the effect of inhibiting the expansion.

As is obvious from the results in Table 3, it was confirmed that the expansion of the battery cell is inhibited even with the negative electrode containing metal Si, germanium, tin, or tin oxide. Meanwhile, the graphite negative electrode failed to inhibit the expansion of the battery cell.

The silane compounds contained in the non-aqueous electrolyte of the present invention were subjected to the cyclic voltammetry (CV) measurement to demonstrate that all the compounds were decomposed near 0.4 V.

It is considered that the graphite negative electrode has no capacity at 0.24 V or higher, and thereby the active decomposition and coating formation of the silane compound do not occur to fail to yield the effect of inhibiting the expansion of the battery cell.

The graphite negative electrode has a smaller capacity than silicon-, germanium-, or tin-based negative electrode, and thereby has a problem that the capacity is not increased when forming the battery.

The silane compound contained in the non-aqueous electrolyte of the present invention had lower LUMO than FEC (LUMO: -0.3921 eV) and PHITVS, and it was suggested that the silane compound had an excellent reductive decomposability on the negative electrode. In addition, the HOMO tended to be higher than that of FEC (HOMO: - 8.9715 eV), and it was suggest that the higher HOMO and the lower LUMO combined to yield high ability to form the coating, which was formation of a good coating after the reductive decomposition.

INDUSTRIAL APPLICABILITY

The present invention can provide the non-aqueous electrolyte that can inhibit the expansion of the battery cell.

It should be noted that the present invention is not limited to the above-described embodiments. The embodiments are just examples, and any examples that substantially have the same configuration and demonstrate the same functions and effects as those in the technical concept disclosed in claims of the present invention are included in the technical scope of the present invention.

**Claims**

1. A non-aqueous electrolyte used for a non-aqueous electrolyte secondary battery in which a negative electrode contains at least any of a silicon compound, a germanium compound, and a tin compound as a negative electrode active material particle, the non-aqueous electrolyte comprising a silane compound represented by the following general formula (1):

$$Si(R^1)_l(R^2)_m(R^3)_{4-l-m} \quad (1)$$

wherein $R^1$ represents an aryl group in which a part or all of hydrogen atoms in an aryl group having 6 to 20 carbon atoms are substituted with a fluorine atom or a fluoroalkyl group; $R^2$ represents an alkenyl group or alkynyl group having 2 to 20 carbon atoms; $R^3$ represents an alkyl group having 1 to 20 carbon atoms; and "l" and "m" each independently represent an integer of 1 to 3, provided that $2 \leq l+m \leq 4$ is satisfied.

2. The non-aqueous electrolyte according to claim 1, wherein the silane compound represented by the general formula (1) has a lowest unoccupied orbital energy level of -0.40 eV or lower.

3. The non-aqueous electrolyte according to claim 1 or 2, wherein the silane compound represented by the general formula (1) has a highest occupied orbital energy level of -8.8 eV or higher.

4. The non-aqueous electrolyte according to any one of claims 1 to 3, wherein a content of the silane compound represented by the general formula (1) contained in the non-aqueous electrolyte is 0.1 mass% to 10.0 mass%.

5. The non-aqueous electrolyte according to any one of claims 1 to 4, wherein

the negative electrode active material particle in the negative electrode contains a silicon oxide particle coated with a carbon layer, and

the silicon oxide particle contains $Li_2SiO_3$ which is crystalline.

**6.** The non-aqueous electrolyte according to claim 5, wherein, before the negative electrode active material particle is charged and discharged, the negative electrode active material particle has a peak derived from a Si (111) crystal plane obtained by X-ray diffraction using Cu-Kα ray, a crystallite size corresponding to the crystal plane is 5.0 nm or less, and a ratio A/B of an intensity A of the peak derived from the Si (111) crystal plane relative to an intensity B of a peak derived from a $Li_2SiO_3$ (111) crystal plane satisfies the following formula (2):

$$0.4 \leq A/B \leq 1.0 \quad ...(2).$$

**7.** The non-aqueous electrolyte according to any one of claims 1 to 6, wherein, when a potential of $Li/Li^+$ is a 0-V standard, the silane compound represented by the general formula (1) is decomposed to form a coating on the negative electrode within a range of 0.23 V or higher.

**8.** The non-aqueous electrolyte according to claim 7, wherein the coating formed by decomposition of the silane compound represented by the general formula (1) has a stable state within a range of 0.70 V or higher when the potential of $Li/Li^+$ is the 0-V standard.

**9.** A non-aqueous electrolyte secondary battery, comprising:

a positive electrode;
a negative electrode; and
the non-aqueous electrolyte according to any one of claims 1 to 8.

**INTERNATIONAL SEARCH REPORT**

International application No.
**PCT/JP2022/030407**

**A. CLASSIFICATION OF SUBJECT MATTER**

***H01M 10/0567***(2010.01)i; ***H01M 4/13***(2010.01)i; ***H01M 4/134***(2010.01)i; ***H01M 4/136***(2010.01)i; ***H01M 4/36***(2006.01)i; ***H01M 4/38***(2006.01)i; ***H01M 4/48***(2010.01)i; ***H01M 4/58***(2010.01)i
FI: H01M10/0567; H01M4/38 Z; H01M4/48; H01M4/58; H01M4/36 C; H01M4/36 E; H01M4/13; H01M4/134; H01M4/136

According to International Patent Classification (IPC) or to both national classification and IPC

**B. FIELDS SEARCHED**

Minimum documentation searched (classification system followed by classification symbols)

H01M10/0567; H01M4/13; H01M4/134; H01M4/136; H01M4/36; H01M4/38; H01M4/48; H01M4/58

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2008-181831 A (DENSO CORP) 07 August 2008 (2008-08-07)<br>claims, paragraphs [0015], [0049] | 1-4, 7-9<br>5-6 |
| X<br>Y | JP 2019-106362 A (CENTRAL GLASS CO LTD) 27 June 2019 (2019-06-27)<br>claims, paragraphs [0023], [0058] | 1-4, 7-9<br>5-6 |
| X<br>Y | WO 2015/137253 A1 (ADEKA CORPORATION) 17 September 2015 (2015-09-17)<br>claims, paragraphs [0020]-[0023], [0035] | 1-4, 7-9<br>5-6 |
| Y | JP 2017-97952 A (SHIN-ETSU CHEMICAL CO., LTD.) 01 June 2017 (2017-06-01)<br>claims, paragraph [0021] | 5-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 October 2022** | **25 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**
**Information on patent family members**

International application No.
**PCT/JP2022/030407**

| Patent document cited in search report | Publication date (day/month/year) | Patent family member(s) | Publication date (day/month/year) |
|---|---|---|---|
| JP 2008-181831 A | 07 August 2008 | (Family: none) | |
| JP 2019-106362 A | 27 June 2019 | US 2020/0335823 A1<br>claims, paragraphs [0053], [0141]<br>WO 2019/117101 A1<br>EP 3726636 A1<br>KR 10-2020-0090223 A<br>CN 111527636 A | |
| WO 2015/137253 A1 | 17 September 2015 | US 2016/0336621 A1<br>claims, paragraphs [0038], [0054]<br>EP 3118924 A1<br>CN 105917516 A<br>KR 10-2016-0133410 A<br>TW 201539832 A | |
| JP 2017-97952 A | 01 June 2017 | US 2019/0097223 A1<br>claims, paragraph [0032]<br>WO 2017/085911 A1<br>EP 3364483 A1<br>TW 201735422 A<br>CN 108292748 A<br>KR 10-2018-0080239 A<br>CN 113178559 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001185127 A
- JP 2002042806 A
- JP 2006164954 A
- JP 2006114454 A
- JP 2006134719 A


### Non-patent literature cited in the description


- *Journal of Power Sources,* 2020, vol. 450, 227699